# EUROPEAN PATENT SPECIFICATION

(11) **EP 0 580 938 B1**
(45) Date of publication and mention of the grant of the patent: **26.09.2001**
(21) Application number: 93101523.4
(22) Date of filing: 01.02.1993
(51) Int. Cl.: H04L 12/42

(54) **Duplex communication control device**
Steuerungsgerät für Duplex-Kommunikation
Dispositif de commande pour la communication duplex

(30) Priority: 26.06.1992 JP 16926392; 29.06.1992 JP 17071992; 29.06.1992 JP 17072292; 06.07.1992 JP 17835992
(43) Date of publication of application: 02.02.1994
(73) Proprietor: Yokogawa Electric Corporation, Tokyo 180-8750 (JP)
(72) Inventor: Akai, Hajime, Musashino-shi, Tokyo 180 (JP); Ebashi, Hiromichi, Minato-ku, Tokyo 108 (JP); Mizumori, Takashi, Fuchu-shi, Tokyo 183 (JP)
(74) Representative: Henkel, Feiler, Hänzel

(56) References cited:
- EP-A- 0 319 998
- EP-A- 0 339 839
- EP-A- 0 357 992
- EP-A- 0 383 264
- WO-A-85/03825
- WO-A-87/01253
- DE-A- 3 507 618
- ALTA FREQUENZA, vol.57, no.10, December 1988, MILANO IT pages 103 - 109 PIETRO CAMARDA ET AL. 'Hybrid Topologies and Protocols for Local and Metropolitan Fiber Optic Networks'
- PATENT ABSTRACTS OF JAPAN vol. 16, no. 435 (E-1263) 10 September 1992 & JP-A-04 052 734 (OKI ELECTRIC IND CO LTD) 26 May 1992
- PATENT ABSTRACTS OF JAPAN vol. 14, no. 252 (E-934) 30 May 1990 & JP-A-02 071 644 (TOSHIBA CORP.) 12 March 1990
- PATENT ABSTRACTS OF JAPAN vol. 14, no. 139 (E-903) 15 March 1990 & JP-A-02 002 260 (MATSUSHITA ELECTRIC IND CO LTD) 08 January 1990
- PATENT ABSTRACTS OF JAPAN vol. 14, no. 371 (E-963) 10 August 1990 & JP-A-02 034 037 (TOSHIBA CORP) 23 May 1990

## Description

### BACKGROUND OF THE INVENTION

### 1. Field of Invention

The present invention relates to a duplex communication control device used with a communication system consisting of a plurality of communication stations connected with a duplex communication network. More specifically, the invention relates to a duplex communication control device capable of being used with a distributed control system that is required to have high reliability to control process variables such as temperature and pressure in a communication system where various communication stations connected with a duplex communication network communicate with each other by token passing, i.e., a token is passed from station to station.

### 2. Description of the Prior Art

A communication system consisting of a plurality of communication stations sharing one communication network is required to control communication in such a way that communication between the stations is carried out in an orderly manner.

Token passing communication control has been heretofore known as a communication control method of this kind. Examples of communication system utilizing token passing are disclosed, for example, in U.S. Pat. No. 4,058,681 issued to Imaizumi et al. and U.S. Pat. No. 4,491,946 issued to Kryskow, Jr. et al. In these disclosed token passing communication control methods, a single token permits each station itself to serve as a master station and to communicate with other stations, using a communication network. The token is successively passed from station to station in terms of token frames in a predetermined sequence. When one communication station receives this token, it controls the whole communication system and, if a request for communication exists, communicates with other stations. If any request for communication does not exist, the token is sent to the next communication station. The cyclic passing of the token frames is managed according to station addresses intrinsic to individual stations. When token frames are passed to the next station, the token frames are normally sent to the station having a station address which is larger than the station address of the present station by one.

This token passing communication control method efficiently uses the communication network. Also, communication control is not centralized. Furthermore, the control is not affected by the length of the communication network. In this way, the token passing has various features. Hence, it is widely accepted in process control systems.

In process control systems required to have high reliability, field control stations assigned to control the process and the communication network to which the field control stations are connected are duplexed. When one fails, the other backs up it.

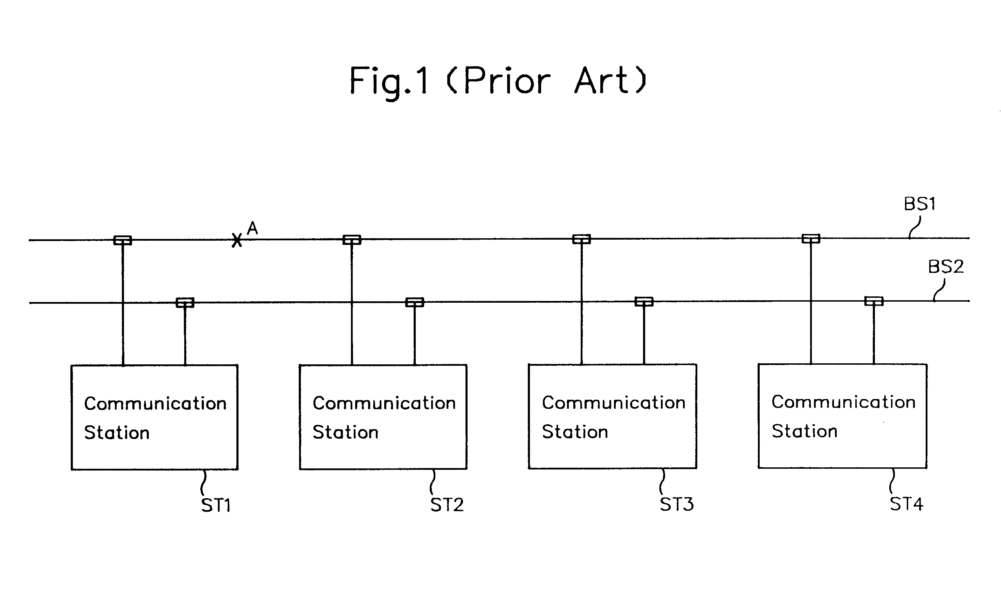

Fig. 1 is a conceptual diagram of one example of communication system consisting of a plurality of communication stations ST1, ST2, etc. connected with a duplex communication network consisting of lines BS1 and BS2. In this communication station, if a trouble occurs at a point A in one communication line BS1, and if the token arrives at the communication station ST1, it is assumed that this station begins to send a token frame toward the communication station ST2, for example, using the first communication line BS1, at first. Then, the transmission is unsuccessful because of the trouble with the line BS1. Therefore, the station ST1 then executes transmission of the token frame, using the second communication line BS2. This transmission will succeed.

In this case, the communication station ST1 informs every communication station connected with the communication network that the first communication line BS1 is at fault when the token is passed to the station ST1. On receiving this message, every station recognizes the failure in the first line BS1 and stops the communication function using the first line BS1. Subsequently, the communication is continued, using the second line BS2.

However, this communication system controlling the communication in this manner has the following problems.
(a) Since the communication station ST1 informs the other stations of the failure in the first line BS1 when the token is again passed to the station ST1 after the failure in the first line BS1 is detected, the other stations cannot recognize the failure in the first line BS1 until the token is passed to the station ST1 again.
(b) If any one communication station fails to receive the message indicating that the first communication line is at fault, this station will never recognize the failure in the line BS1.
(c) If any one communication station not recognizing the failure in one communication line exists, then this station will repeat the operation for detecting failure in one communication line whenever the token is passed to this station. This deteriorates the performance of the communication system. Also, a warning message of failure in one communication line will be repeatedly issued.
(d) When one communication line is at fault, if a new communication station is connected with the communication network, then this station is unable to recognize the failure in one communication line.

Prior art document WO 87/01253 discloses a duplex communication control device according to the preamble of present claim 1. This device includes a state control logic performing the following control. When a transceiver of the device receives the network access permit, i.e. the token, the transceiver changes to the transmit state and begins to transmit packages to their appropriate destinations. If the transmission is completed, the token is handed off to the next appropriate transceiver of the system and returns to the idle state. In case the transceiver detects a transmission error or the collision detecting means detect a collision during transmission, the transceiver also returns into the idle state. Should the collision detecting means detect that there has been no activity on the network for a period of time, the transceiver enters into a renaissance state which includes a strategy to recreate a network access permit.

In a token passing communication system, it is assumed that only one of plural communication stations connected with the communication network holds a token. However, if the system is again set up after being disturbed by noise, or if the same station address is assigned to two stations for some reason, then the two stations hold the token simultaneously. In this situation, it is impossible to control the communication by normal token passing. The operation of the whole system is affected greatly.

The above system of prior art document WO 87/01253 does not avoid this problem

### SUMMARY OF THE INVENTION

It is an object of the present invention to provide a duplex communication control device which prevents a token from being held by two communication stations simultaneously if the communication network is disturbed by the effects of noise and the system is again set up or if the same station address is assigned to two or more stations f or some reason.

The object is achieved with the duplex communication control device of present claim 1.

### BRIEF DESCRIPTION OF THE DRAWINGS

Fig. 1 is a conceptual diagram of a communication system consisting of a plurality of communication stations connected with a duplex communication network;
Fig. 2 is a conceptual diagram of a communication system according to the invention;
Fig. 3 is a block diagram of the internal structure of the communication station ST1 shown in Fig. 2, the station serving as an operator station;
Fig. 4 is a block diagram of the internal structure of the communication stations ST2, ST3, etc. shown in Fig. 2, the stations ST2, ST3, etc. serving as field control stations;
Fig. 5 is a conceptual diagram of main components of the communication control device FCA incorporated in each communication station shown in Figs. 3 and 4;
Fig. 6 is a conceptual diagram of a token frame in a transmission frame delivered from the transmission-reception control means shown in Fig. 5;
Fig. 7 is a conceptual diagram of the bus status list 21 in each communication station;
Fig. 8 is a flowchart illustrating the operation of one communication station connected with the communication network HF shown in Figs. 2-5;
Fig. 9 is a block diagram of other example of the transmission control device FCA ;
Fig. 10 is a block diagram of an example of the transmission control device according to the invention;
Fig. 11 is a flowchart illustrating the operation performed when one communication station obtains a token;

### DESCRIPTION OF THE PREFERRED EMBODIMENTS

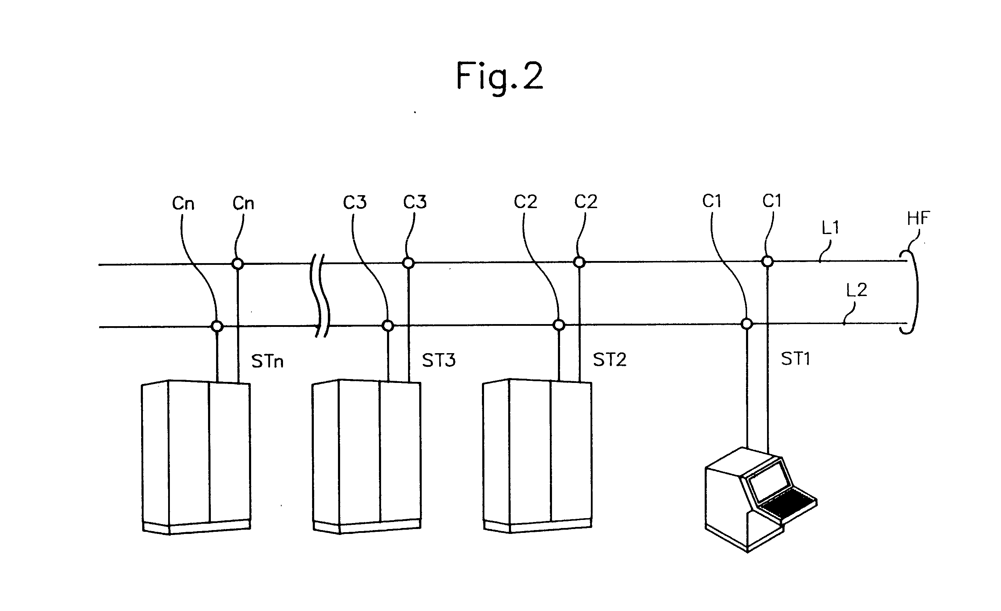

Referring to Fig. 2, a communication system according to the present invention is conceptually illustrated. In this embodiment, it is assumed that the communication system is a process control system. A plurality of communication stations ST1, ST2, etc. each of which constitutes a unit of communication are all connected with a duplex, bidirectional communication network HF consisting of a first communication line L1 and a second communication line L2. Each station STi is coupled to the communication network HF by a pair of couplers Ci. Each station is equipped with a communication control device which controls communication by token passing.

The communication station ST1 is an operator station which permits a human operator to monitor the whole system. This station ST1 gives instructions about control operations and has a keyboard and a graphic display acting as a man-machine interface. The other communication stations such as ST2 and ST3 are distributed field control stations and control the process under the control of the operator station and under the instructions given from the operator station.

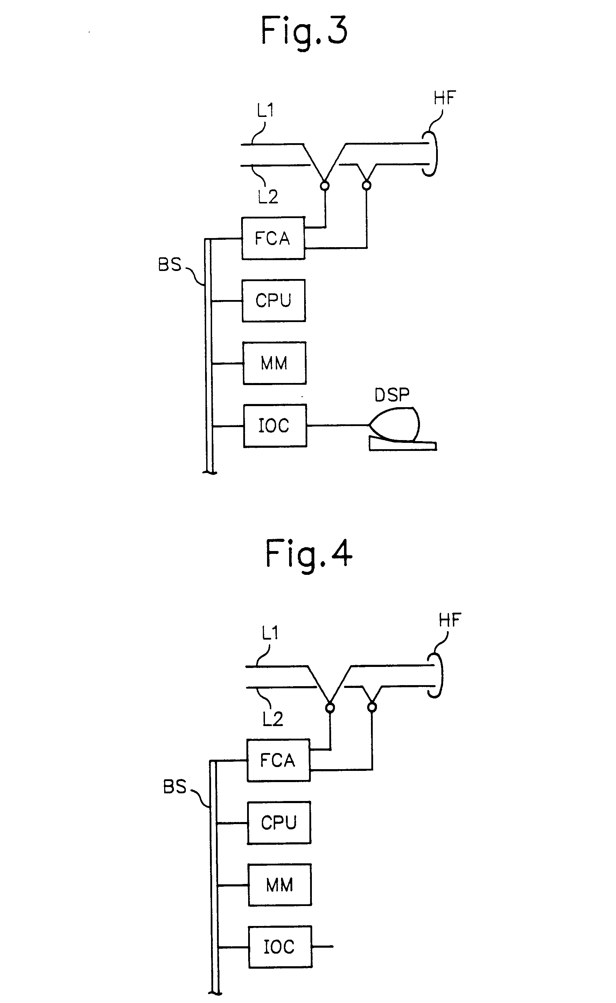

Fig. 3 is a block diagram showing the internal structure of the communication station ST1 acting as the operator station. This station includes a communication control device FCA, a central processing unit CPU, a main memory unit MM, and an input/output control unit IOC. The communication control device FCA is coupled to the duplex communication network HF via a pair of couplers and connected with the processor unit CPU, the main memory unit MM, and the input/output control unit IOC via an internal bus BS.

The communication control device FCA comprises a processor used only for communication and a peripheral circuit. The device FCA executes communication processing independent of the processor unit CPU at the request of other unit or other communication station. This processing utilizes token passing, i.e., when a token is passed to the station itself, communication processing is performed by the use of the duplex communication network HF. If both lines L1 and L2 of the duplex network are normal, both lines L1 and L2 are alternately used, or a predetermined one is employed. If one communication line is at fault, the normal one is used.

The processor unit CPU performs various kinds of internal data processing as the operator station. When the need of communication arises, the processor unit CPU prepares commands or data used for communication in a transmission buffer included in the main memory unit MM, and delivers a communication request to the communication control device FCA according to the kind of communication. The results of communication made under the control of the communication control unit FCA are stored in a reception buffer. The processor unit CPU utilizes the stored data as the need arises.

A keyboard DSP and a graphic display acting as a man-machine interface are connected with the input/output control unit IOC. A typewriter and other devices (not shown) are connected via the input/output control unit IOC.

Fig. 4 is a block diagram showing the internal structure of each of the communication stations ST2, ST3, etc., acting as field control stations. The internal structure of each station is essentially the same as the internal structure of the communication station ST1. Each of the stations ST2, ST3, etc. comprises a communication control device FCA connected with the duplex communication network HF via a pair of couplers, a central processing unit CPU connected via an internal bus BS, a main memory unit MM, and an input/output control unit IOC. Actuators such as sensors and valves installed in the process control device are connected with the input/output control unit IOC directly or via a field bus.

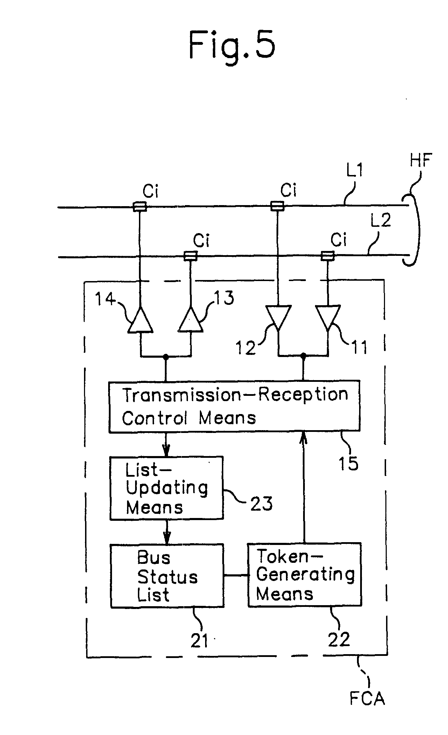

Fig. 5 conceptually illustrates some of the main components of the communication control device FCA included in each communication station STi. This control device FCA includes receivers 11 and 12 which receive communication frames sent over the first communication line L1 and the second communication line L2 of the duplex communication network HF. Drivers 13 and 14 transmit communication frames through the communication lines L1 and L2. The control device FCA is further equipped with a transmission-reception communication control means 15 connected with the receivers and with the drivers. This control means 15 controls the token passing communication, sends and receives communication frames, checks data, and performs other functions.

A bus status list 21 stores bus status information indicating whether the communication stations connected with the two communication lines L1 and L2 can communicate by the use of the two lines L1 and L2. The list 21 is included in the memory inside the communication control device FCA or in a part of the memory unit MM. A token-generating means 22 serves to transmit a token, i.e. , an authorization to control the system. When one station holds a token, if a token frame is sent to the next station, the token-generating means 22 carries the newest bus status information possessed by said one station on the token frame and transmit them. A list-updating means 23 receives the token frame transmitted over the two communication lines L1 and L2 and updates the contents of its own bus status list 21 according to the bus status information carried on the token frame.

When the communication frame is transmitted, the transmission-reception control means 15 refers to the bus status list 21. If the information stored in this list indicates that none of the two communication lines L1 and L2 are at fault, then the two lines L1 and L2 are alternately used or a predetermined one is used. If one of them is at fault, the communication line not at fault is selected. The communication frame is sent over the selected line.

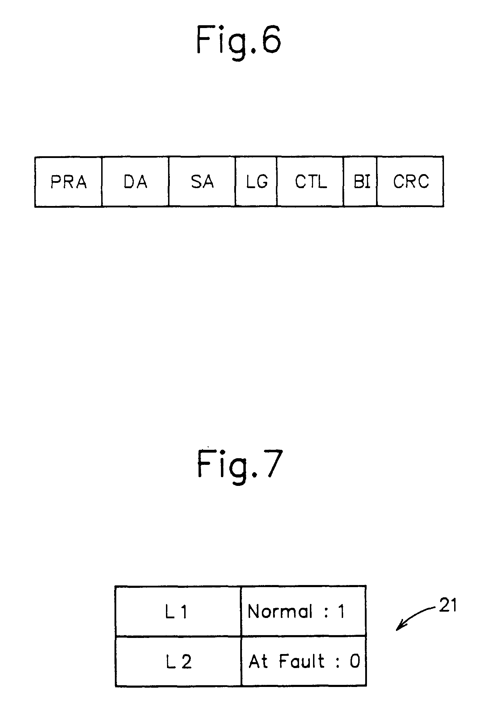

Fig. 6 conceptually illustrates the token frame of the communication frame delivered from the transmission-reception control means 15. This token frame comprises a preamble portion PRA indicating the head of the frame, address information DA about the addressed communication station, address information SA about the transmitting communication station, length information LG about the communication frame, control information CTL containing information indicating the kind of the token frame and control information for transmitting information, bus status information BI for the newest bus status (information indicating whether the communication lines L1 and L2 can be used or not), and a check code CRC. One kind of token frame is a normal token frame for sending the token only to those communication stations which presently participate in the communication. Another example of token frame is a diagnostic token for passing the token to a communication station which does not currently participate in the communication but may participate in the communication in the future.

Fig. 7 conceptually illustrates the bus status list 21 incorporated in each communication station. Data indicating the newest state of each of the communication lines L1 and L2 are stored in this list. For example, state 1 indicates that the communication line is normal, while state 0 indicates that the line is at fault. If a communication line is normal, or in state 1, it follows that communication over the communication line is possible. If a communication line is at fault, or in state 0, it follows that communication over the communication line is impossible. When one station gains a token and sends out a communication frame, the station can know whether this transmission is successful or not, based on the bus status information as described above. The obtained newest information about the bus status is stored in the list. When one station receives the token, the list-updating means 23 updates the contents of the list according to the bus status information carried on the token. In this way, the contents of the bus status list 21 are updated quickly and changed into the newest bus status information.

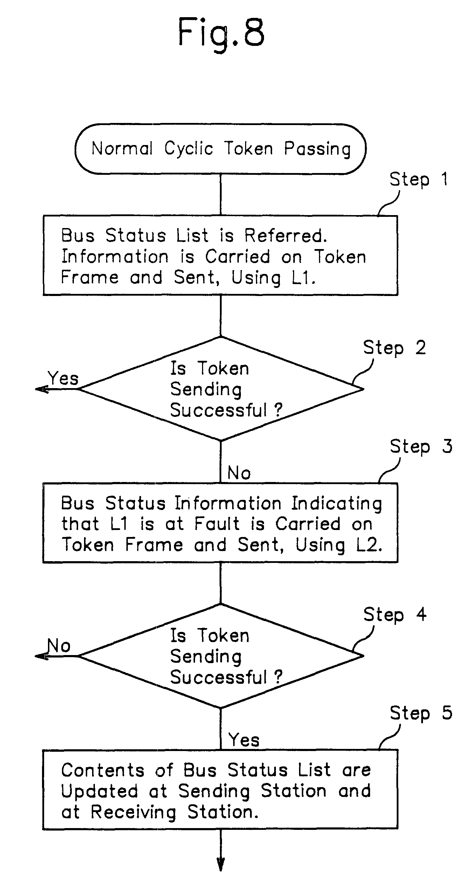

The operation of the apparatus constructed as described above is next described. Fig. 8 is a flowchart illustrating the operation of one communication station connected with the communication network HF. For example, a token is present in the communication station ST1 at first. The transmission-reception control means 15 refers to its own bus status list 21. The information is carried on the token frame. A destination address indicates the next station ST2. The information is transmitted over the communication line, e.g., L1, regarded as normal by the bus status list 21 (step 1). A decision is made to see if the transmission of the token is successful, by checking the acknowledgment signal from the communicating station (step 2). If the transmission of the token is successful, then the token is shifted to the addressed communication station ST2.

If the result of the decision made in step 2 is that the transmission of the token is unsuccessful, i.e., no acknowledgment signal is sent from the communicating station, then the station ST1 regards the communication line L1 as at fault and carries bus status information indicating that the line L1 is at fault on the token. Then, the token is transmitted over the communication line L2 (step 3). Thereafter, a decision is made to determine whether the transmission of the token over the line L2 has successful or not (step 4).

If the result of the decision is that the transmission has been successful, then the station ST1 updates the contents of its bus status list 21 so as to indicate that the line L1 is at fault. Also, in the communication station ST2 receiving this token, the list-updating means 23 updates the contents of its own bus status list 21 and changes them into the newest information according to the bus status information (information indicating that the line L1 is at fault) carried on the token (step 5).

If there is a request for transmission of data or other communication, the communication station ST2 gaining the token executes the communication operation. Then, the station ST2 transmits the token to the next communication station, or the station ST3, over the line L2 according to the contents of its own bus status list 21 in the same way as the foregoing, i.e., the bus status information is carried on the token and transmitted.

By carrying out the above-described series of operations, the contents of the bus status lists of the communication stations are updated so as to represent the newest condition when the token is cycled through the stations participating in the communication.

If the result of the decision made in step 4 is that the transmission of the token over the communication line L2 is unsuccessful, then given processing for confirmation is carried out. As an example, transmission of the token over the line L2 is retried. A check is made to see if an effective response is not obtained. Similarly, the token is transmitted over the line L1. If no response is obtained, then the communication lines L1 and L2 are judged to be at fault. The defective locations are detected.

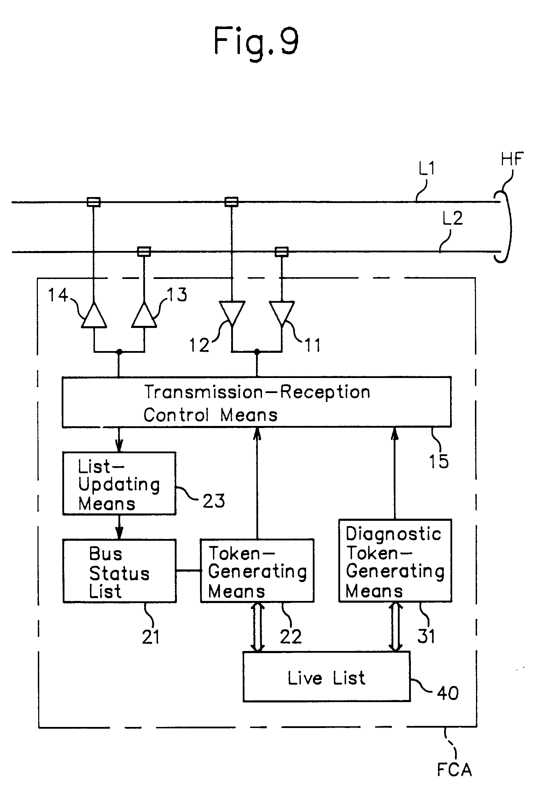

Fig. 9 is a block diagram of another example of the communication control device FCA. In this embodiment, each communication station is equipped with a diagnostic token-generating means 31. The diagnostic token generated by the diagnostic token-generating means 31 urges either a new communication station connected with the first line L1 and the second line L2 or a station whose power supply is turned on to participate in the communication. The newest bus status information held by the station itself is carried on the diagnostic token and transmitted.

If the list-updating means 23 receives the diagnostic token, the updating means updates the contents of the bus status list 21 held in the station according to the bus status information carried on the diagnostic token frame.

A live list 40 indicates the state of operation of the communication stations which have been or will be connected with the communication lines L1 and L2. In this embodiment, each communication station either participating in the communication or operating is termed an active station. Each station not participating in the communication is termed an inactive station. This live list is updated by receiving information which is transmitted by each communication station at regular intervals of time and which indicates that the station is in active condition.

The diagnostic token-generating means 31 refers to this live list 40 and sends a diagnostic token at regular intervals of time to those stations which are inactive in the list. Normal token generated by the token-generating means 31 is cycled through the stations which are active in the live list 40.

In this embodiment, when a new communication station participates in the token passing communication, the status information on the duplex communication network can be made coincident with the information about the other communication stations without the need to take complicated steps.

In this configuration, the bus status information indicating failure in the duplex communication network and indicating whether the defective stations have recovered can be quickly and certainly sent to every communication station. Deterioration of the performance of the communication due to erroneous bus status information can be prevented. Where the system recovers from failure, it can immediately shift to normal operation of duplex communication network and, therefore, a reliable duplexed system can be realized.

In the embodiment of Fig. 9, when a new communication station participates in the token passing communication, the information about the status of the duplexed communication network can be made coincident with the information about other communication stations without the need to take complicated steps.

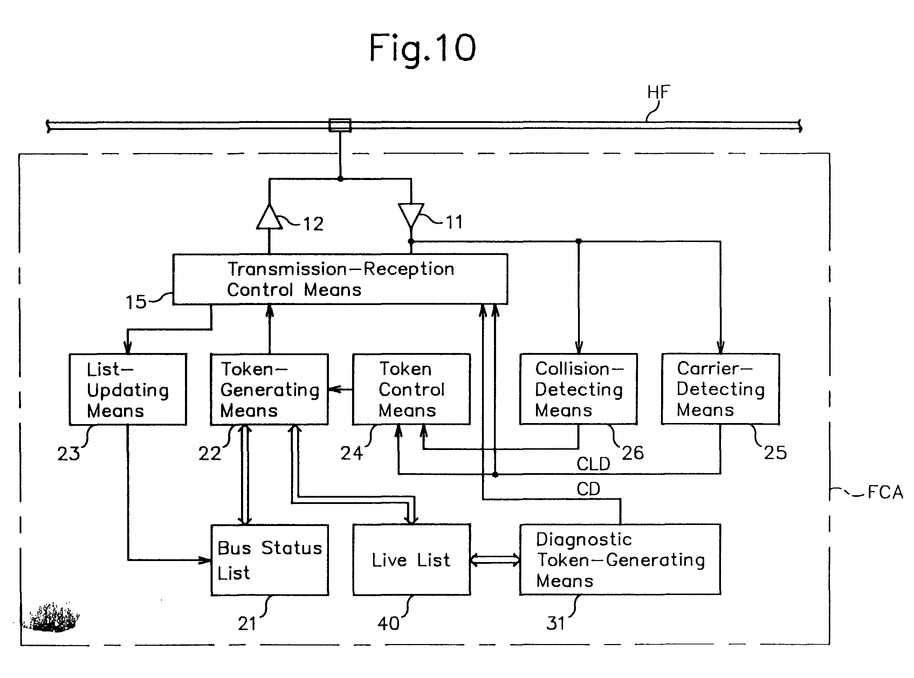

Fig. 10 is a block diagram of an example of the communication control device FCA according to the invention. In this embodiment, a means is added which eliminates problems produced when a plurality of token frames that are symbols of authority are present on the communication network HF shared by the communication control devices. Main components of this means are shown in Fig. 10.

In a token passing communication system, it is assumed that only one of plural communication stations connected with the communication network HF holds a token. However, if the system is again set up after being disturbed by noise, or if the same station address is assigned to two stations for some reason, then the two stations hold the token simultaneously. In this situation, it is impossible to control the communication by normal token passing. The operation of the whole system is affected greatly.

In this embodiment, the means for removing such problems is added. The communication control device FCA of Fig. 10 has a transmission-reception control means 15 which controls the token passing communication and detects errors. A carrier-detecting means 25 receives the signal, for example, on one communication line L1 via a receiver 11 and detects the presence or absence of the carrier from the signal level on the line L1. A collision-detecting means 26 similarly receives the signal on the communication line L1 via the receiver 11. For example, this detecting means 26 monitors the DC component level on the line L1 and has a comparator which detects variations in the signal level caused when the frame delivered from this station is superimposed on the frame delivered from another station.

The communication station of the token-generating means 22 receives the token. When this token is held, the token-generating means 22 transmits the token to the next communication station under the control of a token control means 24. This control means 24 controls the token-generating means 22 in such a way that when the output signal CD from the carrier-detecting means 25 indicating detection of the carrier or the output signal CLD from the collision-detecting means 26 is received, the token held by the station is abandoned.

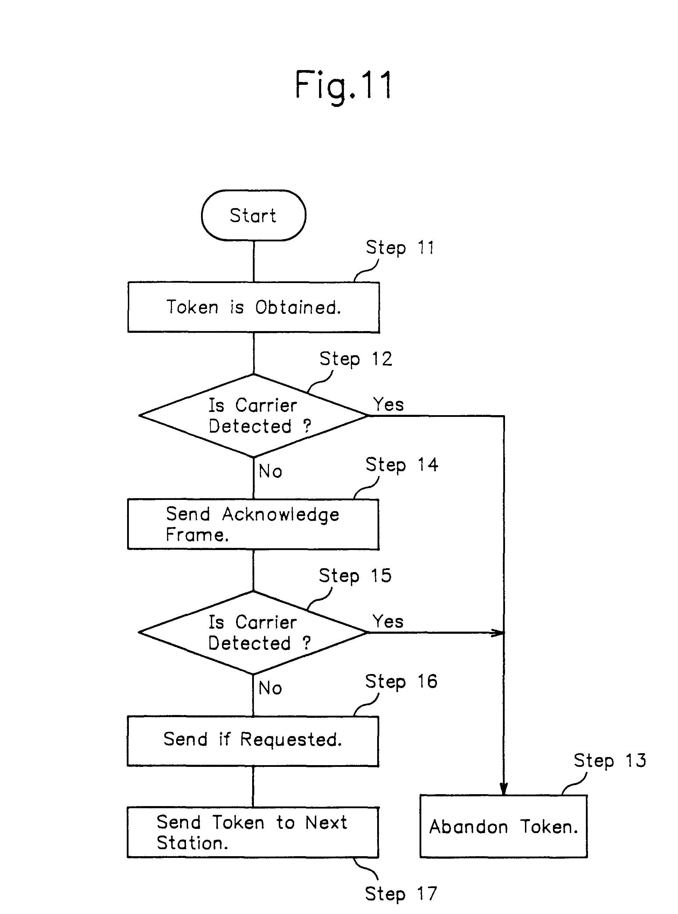

Fig. 11 is a flowchart illustrating the operation performed when one communication station having the communication control device of the structure shown in Fig. 10 has obtained the token. The transmission-reception control means 15 usually monitors the token frame transmitted over the communication line L1 or L2. If the token frame is addressed to the communication station of the control means, then it obtains the token (step 11). Then, the carrier-detecting means 25 makes a decision to see if the carrier transmitted over the communication line L1 is received or not, i.e., to see if any other communication station connected with the line L1 is sending the carrier or frame (step 12).

If the carrier is detected, i.e., if the output signal CD from the carrier-detecting means 25 is active, the token control means 24 determines that any other station obtaining the token exists other than the communication station itself. The control means 24 instructs the token-generating means 22 not to generate a token (instructs the token-generating means 22 to abandon the token) (step 13).

If the result of the decision made in step 12 is that no carrier is detected, the transmission-reception control means 15 determines that any other communication station does not have a token, and transmits an acknowledge frame (step 14). One example of the transmitted frame is an acknowledge frame informing the station sending the token that the token has been received. After the transmission of the acknowledge frame, the collision-detecting means 26 monitors the DC signal level on the communication line L1 via the receiver 11 and makes a decision to see if the frame transmitted by the station itself over the line L1 collides with the frame transmitted by any other station (step 15).

If a collision is detected, i.e., if the output signal CLD from the collision-detecting means 26 is active, then the token control means 24 determines that any other station gains the token. The control means 24 instructs the token-generating means 22 not to generate a token, i.e., instructs the token-generating means 22 to abandon the token (step 13).

Thus, a situation in which the communication station itself transmits a frame and, at the same time, any other station transmits a frame is quickly and certainly detected. This situation might not be detected by the carrier-detecting means 25. A serious situation which would be caused by the presence of two tokens can be avoided.

If no collision is detected in step 15, and if there is a request for a given transmission, then this communication operation and processing of commands are performed (step 16). When the given communication operation ends, or when there is no request for transmission, the token-generating means 22 sends a token frame to the next station (step 17). This transmission of a token is carried out as illustrated in the flowchart of Fig. 8.

If the token is abandoned in step 13, any other station keeps holding the token. The communication is effected under the control of this station.

If a similar collision of frames is detected in any other station and the token is abandoned, then it follows that the token disappears from the communication lines. To allow for this disappearance of the token, the communication control devices of the stations are equipped with their respective token monitor timers which are set at different times. The token-generating means of the communication control device having the monitor timer run out earliest transmits a new token. Therefore, if processing for abandoning the token is performed in step 13, the token passing communication control operation of the whole system is continued normally.

In this embodiment, if two or more communication stations of the token passing communication control system transmit tokens, then the whole system connected with the communication network would be affected. This situation is quickly detected, and then the tokens are abandoned. Hence, a reliable communication control device can be accomplished.

## Claims

1. A duplex communication control device for transmitting and receiving data among a plurality of communication stations connected to a communication network by passing a token therebetween, each of said plurality of communication stations comprising:
- carrier detecting means (25) for detecting a carrier on said communication network;
- token frame generating means (22) for transmitting a token frame over said communication network; and
- collision detecting means (26) for outputting an output signal indicating a collision when a frame from another communication station is received after transmission of said token frame;
**characterized in that** each of said plurality of communication stations further comprises:
- token control means (24) for controlling the token-generating means (22) in such a way that when a token is received and said carrier detecting means (25) detects a carrier during a given period of time while said token is held by said token frame generating means (22) or when said collision detecting means (26) detects a collision, the token held by the station is abandoned and the station enters a reception state.

2. The device of claim 1 wherein each of said plurality of communication stations are provided with a monitor timer (27) which is set at different times for the different communication stations, the minimum values of the times being larger than the maximum times during which no carrier exists on the communication network during normal operation; and wherein when said carrier detecting means (25) detects no carrier throughout the period of time during which said monitor timer (27) is set, said token frame generating means (22) determines that said token has disappeared from said communication network and transmits a token frame over said communication network.

## Patentansprüche

1. Duplex-Kommunikationssteuervorrichtung zum Übertragen und Empfangen von Daten unter einer Mehrzahl von mit einem Kommunikationsnetzwerk verbundenen Kommunikationsstationen durch Weiterleiten eines Tokens dazwischen, wobei jede der Mehrzahl von Kommunikationsstationen umfaßt:
Trägererfassungsmittel (25) zum Detektieren eines Trägers auf dem Kommunikationsnetzwerk;
Token-Frame-Erzeugungsmittel (22) zum Übertragen eines Token-Frames über das Kommunikationsnetzwerk; und
Kollisions-Erfassungsmittel (26) zum Ausgeben eines Ausgangssignals, das eine Kollision angibt, wenn ein Frame von einer weiteren Kommunikationsstation nach der Übertragung des Token-Frames empfangen wird;
**dadurch gekennzeichnet, daß** jede der Mehrzahl von Kommunikationsstationen ferner umfaßt:
Token-Steuermittel (24) zum Steuern des Token-Erzeugungsmittels (22) auf eine solche Art und Weise, daß wenn ein Token empfangen wird und das Trägererfassungsmittel (25) einen Träger während einer gegebenen Zeitspanne detektiert, während das Token durch das Token-Frame-Erzeugungsmittel (22) erhalten wird, oder wenn das Kollisions-Erfassungsmittel (26) eine Kollision detektiert, das von der Station erhaltene Token dann aufgegeben wird und die Station in einem Empfangszustand eintritt.

2. Vorrichtung gemäß Anspruch 1, bei der jeder der Mehrzahl von Kommunikationsstationen mit einem Monitor-Zeitgeber (27) versehen wird, der auf unterschiedliche Zeiten für die unterschiedlichen Kommunikationsstationen eingestellt wird, wobei die Minimalwerte der Zeiten größer als die Maximalzeiten sind, währendderselben kein Träger auf dem Kommunikationsnetzwerk während des Normalbetriebs existiert; und bei der, wenn das Trägererfassungsmittel (25) keinen Träger während der Zeitspanne detektiert, währendderselben der Monitor-Zeitgeber (27) eingestellt ist, das Token-Frame-Erzeugungsmittel (22) bestimmt, daß das Token von dem Kommunikationsnetzwerk verschwunden ist und ein Token-Frame über das Kommunikationsnetzwerk überträgt.

## Revendications

1. Dispositif de commande pour la communication duplex destiné à transmettre et recevoir des données parmi une pluralité de postes de télécommunications connectés à un réseau de télécommunications en faisant circuler un jeton entre eux, chacun des postes de ladite pluralité de postes de télécommunications comprenant :
- des moyens de détection de porteuse (25) destinés à détecter une porteuse sur ledit réseau de télécommunications ;
- des moyens de génération de séquence de jeton (22) destinés à transmettre une séquence de jeton sur ledit réseau de télécommunications ; et
- des moyens de détection de collision (26) destinés à émettre un signal de sortie indiquant une collision lorsqu'une séquence en provenance d'un autre poste de télécommunications est reçue après la transmission de ladite séquence de jeton,
**caractérisé en ce que** chaque poste de ladite pluralité de postes de télécommunications comprend en outre :
- des moyens de commande de jeton (24) destinés à commander les moyens de génération de séquence de jeton (22) de telle sorte que lorsqu'un jeton est reçu et lorsque lesdits moyens de détection de porteuse (25) détectent une porteuse pendant un intervalle de temps déterminé alors que ledit jeton est contenu dans lesdits moyens de génération de séquence de jeton (22), ou lorsque lesdits moyens de détection de collision (26) détectent une collision, le jeton contenu dans le poste est abandonné et le poste entre en phase de réception.

2. Dispositif selon la revendication 1, **caractérisé en ce que** chaque poste de ladite pluralité de postes de télécommunications est équipé d'un moniteur générateur d'horloge de contrôle (27) qui est réglé à différentes valeurs horaires pour les différents postes de télécommunications, les valeurs horaires minimales étant plus grandes que les intervalles maximum durant lesquels aucune porteuse n'existe sur le réseau de télécommunications lors de son fonctionnement normal ; et en ce que, lorsque lesdits moyens de détection de porteuse (25) ne détectent aucune porteuse pendant l'intervalle de temps pendant lequel ledit moniteur générateur de rythme (27) est réglé, lesdits moyens de génération de séquence de jeton (22) indiquent que ledit jeton a disparu dudit réseau de télécommunications et transmettent une séquence de jeton sur l'ensemble du réseau de télécommunications.
